# EUROPEAN PATENT APPLICATION

(11) **EP 2 030 888 A1**
(43) Date of publication of application: **04.03.2009**
(21) Application number: 07744586.4
(22) Date of filing: 01.06.2007
(51) Int. Cl.: B62M 7/02, F01L 9/02, F02B 61/02

(54) **MOTORCYCLE**

(30) Priority: 19.06.2006 JP 2006169238
(71) Applicant: Yamaha Hatsudoki Kabushiki Kaisha, Iwata-shi, Shizuoka 438-8501 (JP)
(72) Inventor: MORIKAWA, Takeshi c/o Yamaha Hatsudoki Kabushiki Kaisha, Shizuoka-ken 438-8501 (JP); OKUWA, Yoshinori c/o Yamaha Hatsudoki Kabushiki Kaisha, Shizuoka-ken 438-8501 (JP)
(74) Representative: Schoppe, Fritz
(86) International application number: PCT/JP2007/061198
(87) International publication number: WO 2007/148523

(57) **Abstract**

An engine (20) provided in a lower part of a motorcycle (100) is arranged such that an axis (CL1) of its cylinder (SI) extends in a front-and-rear direction (Y-direction) of the motorcycle (100). Furthermore, the engine (20) is arranged such that an intake port (Pa1) and an exhaust port (Pb1) in the engine (20) line up in a right-and-left direction (X-direction) of the motorcycle (100). An intake system (50a) and an exhaust system (50b) in the engine (20) are respectively curved toward one side and the other side in the right-and-left direction (X-direction) around the axis (CL1) of the cylinder (SI).

## Description

### [Technical Field]

The present invention relates to a motorcycle including an engine as a power source.

### [Background Art]

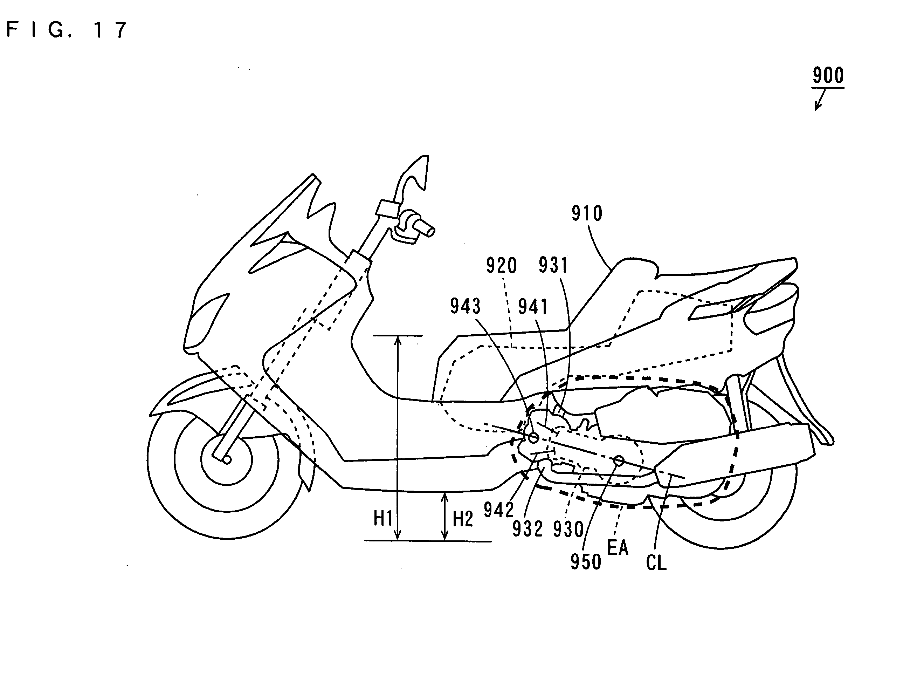

There are motorcycles including containing boxes. Fig. 17 is a schematic side view showing an example of a conventional motorcycle including a containing box.

In an example shown in Fig. 17, a seat 910, a containing box 920, and an overhead camshaft (OHC) engine 930 are provided in this order downward from above at a substantially central part of a motorcycle 900.

A rider of the motorcycle 900 is seated on the seat 901. Therefore, the height H1 of the seat 910 must be set to a height at which the rider can easily touch a road surface with his/her feet when seated, for example, a height at which human beings having an average physique can easily touch the ground with their feet.

Furthermore, the containing box 920 is provided so as to mainly contain a helmet. If another baggage, together with the helmet, can be contained in the containing box 920, however, it is very convenient for the rider of the motorcycle 900.

Therefore, it is required that the size in a top-and-bottom direction of the containing box 920 is increased while the height H1 of the seat 910 is limited to a predetermined height in the motorcycle 900.

On the other hand, the motorcycle 900 including the containing box 920, as described above, is also required to have such a high performance of traveling on an irregular surface that it can travel on various road surfaces without the bottom thereof coming into contact therewith. In this case, it must be ensured that a height H2 from the road surface to the bottom of the motorcycle 900 is not less than a predetermined height.

To ensure that the height H2 is not less than the predetermined height allows the motorcycle 900 to completely travel on a road surface having large irregularities without the bottom thereof coming into contact with the road surface.

Therefore, it is preferable that the size in a top-and-bottom direction of a region occupied by the engine 930 and peripheral members thereof (an intake pipe 931, an exhaust pipe 932, an air clearer, etc.) (hereinafter referred to as a power generation region EA) is reduced in order to improve the performance of the motorcycle 900 of traveling on an irregular surface while keeping the size in the top-and-bottom direction of the containing box 920 large.

Therefore, the engine 930 is arranged such that an axis CL of a cylinder is substantially horizontal along a front-and-rear direction of the motorcycle 900, as shown in Fig. 17 (see, for example, Patent Document 1).

In this case, the size occupied by the engine 930 in the top-and-bottom direction of the motorcycle 900 is reduced. This causes the size in the top-and-bottom direction of the power generation region EA to be reduced.
[Patent Document 1] JP 3697886 B

### [Disclosure of the Invention]

### [Problems to be Solved by the Invention]

In the overhead camshaft engine 930 shown in Fig. 17, a camshaft 943 for operating an intake valve 941 and an exhaust valve 942 is arranged parallel to a crankshaft 950 in the vicinity of a cylinder head.

Generally, the intake valve 941 and the exhaust valve 942 are provided so as to be opposed to each other with the camshaft 943 sandwiched therebetween. Thus, the engine 930 shown in Fig. 17 is arranged such that the cylinder is substantially horizontal. Therefore, an intake port and an exhaust port (not shown) respectively corresponding to the intake valve 941 and the exhaust valve 942 are arranged in the top-and-bottom direction within a plane (a vertical plane) perpendicular to the crankshaft 950 and the camshaft 943. Thus, the intake pipe 931 is connected to the top of the engine 930, and the exhaust pipe 932 is connected to the bottom of the engine 930, as shown in Fig. 17.

In this case, the intake pipe 931 and the exhaust pipe 932 must be curved somewhat gently in order to improve the intake and exhaust efficiencies of the engine 930. Therefore, a space where the intake pipe 931 and the exhaust pipe 932 are routed is required at the top or the bottom of the engine 930. Furthermore, a space to which a member such as the air cleaner is attached is required at the top or the bottom of the engine 930.

Even when the engine 930 is arranged such that the cylinder is substantially horizontal, therefore, it is difficult to sufficiently reduce the size in the top-and-bottom direction of the power generation region EA.

On the other hand, there is a scooter-type motorcycle in which an engine is not arranged below a seat and a containing box. In this scooter-type motorcycle, foot mounters are respectively provided in right and left portions of a vehicle body between a front wheel and the seat. Furthermore, the engine is arranged in a portion, between the right and left foot mounters, of the vehicle body.

A rider straddles a portion of the vehicle body between the front wheel and the seat to get on and off the scooter-type motorcycle. In this scooter-type motorcycle, therefore, it is preferable that the portion of the vehicle body which the rider straddles is as low as possible.

When the engine is arranged in the portion of the vehicle body which the rider straddles, as described above, however, the rider must raise his or her foot in straddling the portion of the vehicle body between the front wheel and the seat to get on and off the motorcycle.

Even in the motorcycle 900 having such a configuration, the position of the engine cannot be made low in order to ensure the performance of traveling on an irregular surface. As a result, it is difficult to improve a getting on/off performance.

### [Means for Solving the Problems]

An object of the present invention is to provide a motorcycle capable of sufficiently reducing a region occupied by an engine and peripheral members thereof in a top-and-bottom direction of a vehicle body.
(1)
   According to an aspect of the present invention, a motorcycle includes an engine including a cylinder and a cylinder head that form a combustion chamber, a driving wheel, a transmission mechanism that transmits to the driving wheel power generated by the engine, and a supporting member that supports the engine and the driving wheel, in which the cylinder may be arranged such that its axis extends in a front-and-rear direction of the motorcycle, and the cylinder head may include an intake opening and an exhaust opening in the combustion chamber that are respectively arranged on one side and the other side with respect to a vertical plane including the axis of the cylinder.
   In the motorcycle, the engine and the driving wheel are supported by the supporting member. The transmission mechanism transmits to the driving wheel the power generated by the engine. This causes the driving wheel to rotate, causing the motorcycle to move forward.
   The cylinder in the engine is arranged such that the axis extends in the front-and-rear direction of the motorcycle. This causes a space occupied by the engine in a top-and-bottom direction of the motorcycle to be reduced.
   Furthermore, the intake opening and the exhaust opening in the combustion chamber do not line up in a vertical direction, so that a space occupied by the engine and peripheral members of the engine can be sufficiently reduced in the vertical direction.
   Thus, the engine can be arranged as below as possible while keeping a height from a road surface to the bottom of the motorcycle sufficiently large. This allows a high performance of traveling on an irregular surface to be obtained. Furthermore, the position of the center of gravity of the motorcycle can be made low, so that the traveling stability and the steering stability of the motorcycle can be improved.
   In addition, in the motorcycle, the respective shapes of the peripheral members of the engine can be designed without considering the occupied space in the vertical direction.
(2)
   It is preferable that the axis of the cylinder in the engine is within a range from an angle of 30 degrees diagonally downward to the front of a horizontal plane to an angle of 45 degrees diagonally upward to the front of the horizontal plane.
   In this case, it is possible to sufficiently reduce the space occupied by the engine in the vertical direction while ensuring flexibility in arrangement of the peripheral members of the engine.
(3)
   The motorcycle may further include an intake device that supplies an air-fuel mixture to the combustion chamber, and an exhaust device that exhausts a combustion gas from the combustion chamber, and the cylinder head may further include an intake path curved toward the one side with respect to the vertical plane from the intake opening to communicate with the intake device, and an exhaust path curved toward the other side with respect to the vertical plane from the exhaust opening to communicate with the exhaust device.
   In this case, the intake device supplies the air-fuel mixture into the combustion chamber through the intake path and the intake opening in the cylinder head. Furthermore, the exhaust device exhausts the combustion gas within the combustion chamber through the exhaust opening and the exhaust path in the cylinder head.
   The above-mentioned configuration allows the size of the cylinder head in the vertical direction to be reduced. Furthermore, the intake device can be arranged on the one side with respect to the vertical plane from the intake opening in the cylinder head, and the exhaust device can be arranged on the other side with respect to the vertical plane from the exhaust opening in the cylinder head. This causes the space occupied by the peripheral members of the engine in the vertical direction to be sufficiently reduced. Thus, the degree of curvature of the intake path and the exhaust path can be gently designed in order to route the intake path and the exhaust path.
   Flexibility in design of the intake path and the exhaust path is thus increased. Therefore, each of the intake path and the exhaust path can have a simple configuration. This allows smooth fluid flow to be formed inside the intake path and the exhaust path.
   This can prevent a fuel from adhering to their inner surfaces. Furthermore, an air-fuel mixture can be made to efficiently flow into the combustion chamber, ideal fluid flow can be formed within the combustion chamber, and a combustion gas can be efficiently discharged from the combustion chamber.
   As a result, high-efficiency intake and exhaust in the engine are realized, so that the performance of the engine is improved. Furthermore, the fuel efficiency is improved while a harmful exhaust gas can be reduced.
(4)
   The motorcycle may further include a seat provided in the supporting member, and the engine may be provided so as to be positioned below the seat. In this case, a region occupied by the engine and the peripheral members of the engine in the vertical direction can be sufficiently reduced, so that the height of the seat is set sufficiently low. This makes it possible to obtain ease with which a rider touches the ground with his/her feet.
(5)
   The motorcycle may further include a container provided so as to be positioned above the engine. In this case, the size in the vertical direction of the container can be sufficiently increased. This causes the capacity of the container to be sufficiently increased.
(6)
   In the motorcycle, at least a part of the container may be positioned below the seat. This allows the size of the container to be increased toward the engine positioned below without increasing the height of the seat. This makes it possible to maintain ease with which a rider touches the ground with his/her feet while increasing the size of the container.
(7)
   The motorcycle may further include a foot mounter provided below the front of the seat. In this case, the engine is positioned below the seat, and the foot mounter is positioned below the front of the seat. This eliminates the necessity for a rider to straddle the engine, allowing the rider to easily get on and off the motorcycle by raising his/her foot to the height of the foot mounter.
(8)
   The motorcycle may further include a seat provided in the supporting member, and foot mounters provided on both sides of a portion, below the front of the seat, of the supporting member, and the engine may be provided in a portion, between the foot mounters, of the supporting member.
   In this case, the rider straddles the motorcycle above the engine between portions, where the foot mounters are respectively provided, of the motorcycle to get on and off the motorcycle. A region occupied by the engine and the peripheral members of the engine can be sufficiently reduced in the vertical direction, so that the get on/off performance of the motorcycle are improved.
(9)
   The engine may include a crankshaft extending in a horizontal direction perpendicular to the front-and-rear direction, an intake valve that opens and closes the intake opening, an exhaust valve that opens and closes the exhaust opening, and a camshaft that extends in a horizontal direction perpendicular to the front-and-rear direction and drives the intake valve and the exhaust valve, and the intake opening and the exhaust opening may be provided so as to line up in the horizontal direction perpendicular to the front-and-rear direction or a direction inclined from the horizontal direction.
   In this case, torque generated by the crankshaft due to the rotation of the engine is transmitted to the camshaft. Thus, the camshaft drives the intake valve and the exhaust valve, and the intake opening and the exhaust opening are respectively opened and closed by the intake valve and the exhaust valve.
   Since the intake opening and the exhaust opening in the combustion chamber do not line up in the vertical direction, a region occupied by the intake valve, the exhaust valve, and the camshaft can be sufficiently reduced in the vertical direction.
(10)
   The engine may include an intake valve that opens and closes the intake opening, an exhaust valve that opens and closes the exhaust opening, a first actuator that drives the intake valve, and a second actuator that drives the exhaust valve, and the intake opening and the exhaust opening may line up in a horizontal direction perpendicular to the front-and-rear direction or a direction inclined from the horizontal direction.
   In this case, the intake valve is driven by the first actuator, and the exhaust valve is driven by the second actuator. Thus, the intake opening and the exhaustion opening are respectively opened and closed by the intake valve and the exhaust valve.
   Since the intake opening and the exhaust opening in the combustion chamber do not line up in the vertical direction, a region occupied by the intake valve, the exhaust valve, and the first and second actuators can be sufficiently reduced in the vertical direction.

### [Effects of the Invention]

In a motorcycle according to the present embodiment, an engine is arranged such that an axis of a cylinder extends in a front-and-rear direction of the motorcycle. This causes a space occupied by the engine in a top-and-bottom direction of the motorcycle to be reduced.

Furthermore, an intake opening and an exhaust opening in a combustion chamber do not line up in a vertical direction, so that a region occupied by the engine and peripheral members of the engine can be sufficiently reduced.

### [Brief Description of the Drawings]

[Fig. 1] FIG. 1 is a schematic side view of a motorcycle according to a first embodiment.
[FIG. 2] FIG. 2 is a schematic view for explaining the configuration of constituent members of the engine shown in Fig. 1 and peripheral members thereof.
[FIG. 3] FIG. 3 is a schematic view for explaining the configuration of the constituent members of the engine shown in Fig. 1 and the peripheral members thereof.
[FIG. 4] FIG. 4 is a diagram showing the arrangement of the engine in the motorcycle according to the first embodiment.
[FIG. 5] FIG. 5 is a schematic top view showing a state where the engine in the motorcycle shown in Fig. 1 and the peripheral members thereof are arranged.
[FIG. 6] FIG. 6 is an enlarged top view showing a part of the arrangement of the engine shown in Fig. 5 and the peripheral members thereof.
[FIG. 7] FIG. 7 is a schematic side view showing another example of the configuration of a foot mounter formed in the motorcycle according to the first embodiment.
[FIG. 8] FIG. 8 is a schematic view for explaining the configuration of constituent members of an engine in a motorcycle according to a second embodiment and peripheral members thereof.
[FIG. 9] FIG. 9 is a schematic view for explaining the configuration of the constituent members of the engine in the motorcycle according to the second embodiment and the peripheral members thereof.
[FIG. 10] FIG. 10 is a schematic side view of a motorcycle according to a third embodiment.
[FIG. 11] FIG. 11 is a schematic view for explaining the configuration of constituent members of an engine in the motorcycle according to the third embodiment and peripheral members thereof.
[FIG. 12] FIG. 12 is a schematic view for explaining the configuration of the constituent members of the engine in the motorcycle according to the third embodiment and the peripheral members thereof.
[FIG. 13] FIG. 13 is a schematic view for explaining the configuration of constituent members of an engine in a motorcycle according to a fourth embodiment and peripheral members thereof.
[FIG. 14] FIG. 14 is a schematic view for explaining the configuration of the constituent members of the engine in the motorcycle according to the fourth embodiment and the peripheral members thereof.
[FIG. 15] FIG. 15 is a schematic view for explaining the configuration of constituent members of an engine in a motorcycle according to a fifth embodiment and peripheral members thereof.
[FIG. 16] FIG. 16 is a schematic view for explaining the configuration of the constituent members of the engine in the motorcycle according to the fifth embodiment and the peripheral members thereof.
[FIG. 17] FIG. 17 is a schematic side view showing an example of a conventional motorcycle including a containing box.

### [Best Mode for Carrying out the Invention]

The embodiments of the present invention will be described in detail referring to the drawings. The embodiments below describe motorcycles.

### (1) First Embodiment

### (1-a) Configuration of motorcycle

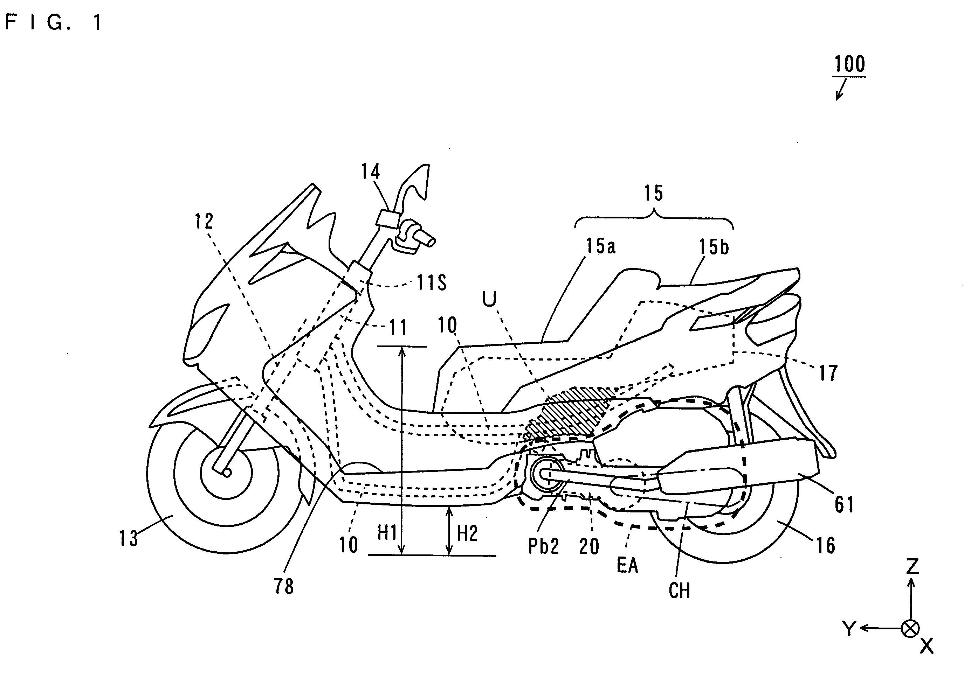

Fig. 1 is a schematic side view of a motorcycle according to a first embodiment. In the following description, the front, the rear, the left, and the right respectively mean the front, the rear, the left, and the right in a case where a user views them with he/she being seated on a seat of the motorcycle.

As shown in Fig. 1, a motorcycle 100 according to the first embodiment includes a vehicle body frame 10. A head pipe 11 is formed at the front of the vehicle body frame 10. A steering shaft 11S is attached to the head pipe 11 so as to be swingable rightward and leftward. A handle 14 is attached to an upper end of the steering shaft 11S.

Furthermore, a front fork 12 for rotatably supporting a front wheel 13 is connected to the steering shaft 11S. This causes the front fork 12 to swing rightward and leftward depending on a rider's operation of the handle 14.

A seat 15 including a main seat 15a and a tandem seat 15b is provided in an upper part of the vehicle body frame 10. Furthermore, an engine 20 is attached to a portion of the vehicle body frame 10 so as to be hung in a substantially central part in a front-and-rear direction of the motorcycle 100. Note that the engine 20, together with its power transmission system, is integrally attached to a swing arm (not shown).

A rear wheel 16 is rotatably provided at one end of the swing arm (not shown). The engine 20 and the rear wheel 16 are connected to each other through the power transmission system. This allows the rear wheel 16 to rotate as the engine 20 rotates.

Foot mounters 78 for the rider are respectively formed on right and left side surfaces of the motorcycle 100. The rider straddles a portion, at the front of the seat 15, of the vehicle body frame 10 to get on and off the motorcycle 100.

In Fig. 1, a driving mechanism CH composed of a belt or the like for transmitting the power of the engine 20 to the rear wheel 16 as the power transmission system is indicated by a one-dot and dash line.

A containing box 17 is provided between the seat 15 and the engine 20. That is, in the motorcycle 100, the seat 15, the containing box 17, and the engine 20 are arranged so as to line up downward from above.

In Fig. 1, three directions that are perpendicular to one another are respectively defined as an X-direction, a Y-direction, and a Z-direction, as indicated by arrows X, Y, and Z. That is, in Fig. 1, a right-and-left direction of the motorcycle 100 is defined as the X-direction, a front-and-rear direction of the motorcycle 100 is defined as the Y-direction, and a top-and-bottom direction of the motorcycle 100 is defined as the Z-direction. In the subsequent drawings, three directions that are perpendicular to one another are respectively defined as the X-direction, the Y-direction, and the Z-direction.

### (1-b) Configuration of engine and peripheral members thereof

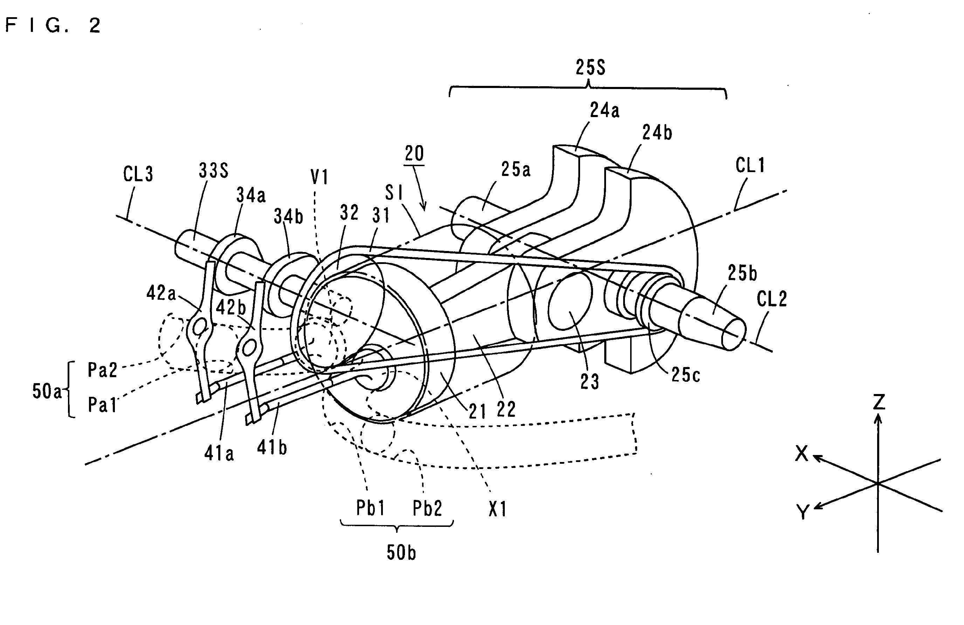

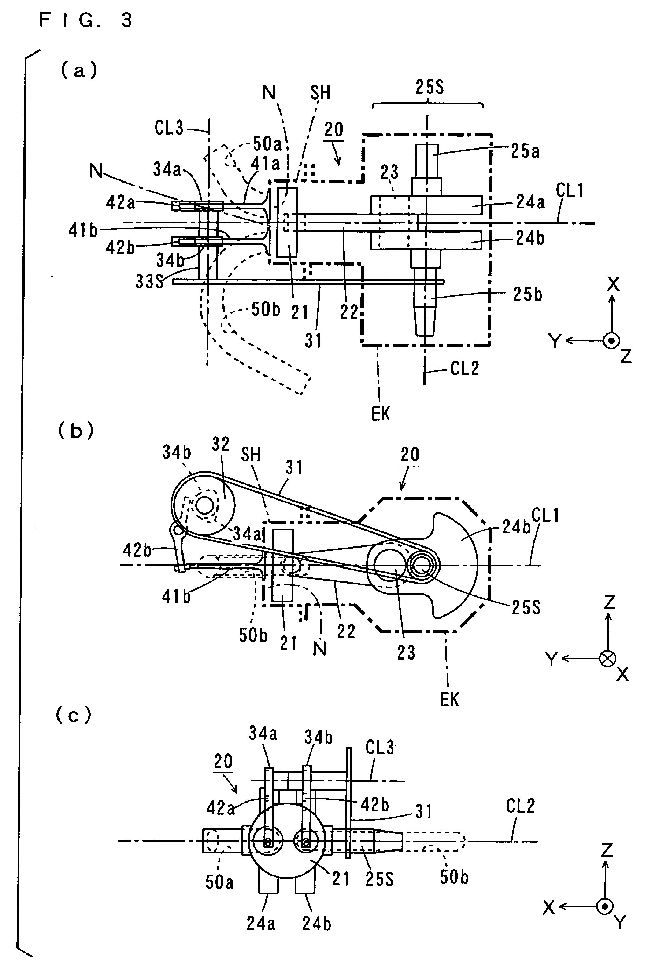

Figs. 2 and 3 are schematic views for explaining the configuration of constituent members of the engine 20 shown in Fig. 1 and peripheral members thereof. Fig. 2 is a perspective view of the constituent members of the engine 20 and the peripheral members thereof, Fig. 3 (a) is a top view of the members, Fig. 3 (b) is a side view of the members, and Fig. 3 (c) is a front view of the members.

As shown in Figs. 2 and 3, in the present embodiment, the engine 20 is provided in the motorcycle 100 such that an axis CL1 of a cylinder SI is substantially parallel to a Y direction axis. That is, the engine 20 is provided in the motorcycle 100 such that the axis CL1 of the cylinder SI is substantially horizontal and extends in the front-and-rear direction. In Fig. 3, the illustration of the cylinder SI is omitted.

A piston 21 provided in the cylinder SI in the engine 20 is attached to one end of a connecting rod 22 by a piston pin (not shown). The other end of the connecting rod 22 is attached so as to be rotatable between two crank webs 24a and 24b with a crank pin 23.

A crankshaft 25a is provided so as to extend toward one side in the X-direction at the center of the crank web 24a. Furthermore, a crankshaft 25b is provided so as to extend toward the other side in the X-direction at the center of the crank web 24b.

The crank pin 23, the crank webs 24a and 24b, and the crankshafts 25a and 25b constitute a crank assembly 25S. An axis CL2 of the crank assembly 25S is provided so as to be parallel to an X direction axis.

In the crank assembly 25S, a drive pulley 25c is provided on a part of the crankshaft 25b. The drive pulley 25c is connected to a driven pulley 32 with a cam chain 31.

The driven pulley 32 is arranged slightly above the cylinder SI (at a position shifted in the Z-direction) in the vicinity of the cylinder head. The driven pulley 32 is attached to a camshaft 33S extending in the X-direction. An axis CL3 of the camshaft 33S is perpendicular to the axis CL1 of the cylinder SI while being parallel to the axis CL2 of the crank assembly 25S.

Two cams 34a and 34b are attached to the camshaft 33S so as to line up in the X-direction. One end of a rocker arm 42a is abutted against an outer peripheral surface of the cam 34a. The rocker arm 42a supports an intake valve 41a so as to be movable back and forth in the Y-direction.

One end of a rocker arm 42b is abutted against an outer peripheral surface of the cam 34b. The rocker arm 42b also supports an exhaust valve 41b so as to be movable back and forth in the Y-direction.

The two rocker arms 42a and 42b are arranged so as to line up in the X-direction. The intake valve 41a and the exhaust valve 41b are also arranged so as to line up in the X-direction.

In Figs. 2 and 3, respective paths of an intake system and an exhaust system in the engine 20 are illustrated in tubular form as paths of gases (an air-fuel mixture and a combustion gas). Therefore, the respective shapes of an inner surface of an intake port in the engine 20 and an inner surface of an intake pipe connected to the intake port are illustrated in an intake system 50a in the engine 20 shown in Figs. 2 and 3. Furthermore, the respective shapes of an inner surface of an exhaust port in the engine 20 and an inner surface of an exhaust pipe connected to the exhaust port are illustrated in an exhaust system 50b in the engine 20.

In Fig. 2, the intake port and the intake pipe in the engine 20 that constitute the intake system 50a are respectively indicated by a symbol Pa1 and a symbol Pa2, and the exhaust port and the exhaust pipe in the engine 20 that constitute the exhaust system 50b are respectively indicated by a symbol Pb1 and a symbol Pb2.

Furthermore, an intake opening serving as a communicating portion between an inner space of the intake port Pa1 and an inner space of the cylinder SI is indicated by a symbol V1, and an exhaust opening serving as a communicating portion between an inner space of the exhaust port Pb1 and the inner space of the cylinder SI is indicated by a symbol X1.

As described above, the intake valve 41a and the exhaust valve 41b are arranged so as to line up in the X-direction. Therefore, the intake port Pa1 and the exhaust port Pb1 in the engine 20 are also arranged in the X-direction.

In the present embodiment, the intake port Pa1 (the intake system 50a) and the exhaust port Pb1 (the exhaust system 50b) are respectively curved toward the one side and the other side in the X-direction around the axis CL1 of the cylinder SI. Thus, an opening of the intake port Pa1 in the engine 20 is formed so as to be directed toward the one side in the X-direction, and an opening of the exhaust port Pb1 is formed so as to be directed toward the other side in the X-direction.

As a result, in the present embodiment, each of the intake pipe Pa2 and the exhaust pipe Pb2 respectively constituting the intake system 50a and the exhaust system 50b can be attached to the engine 20 from the one side and the other side in the X-direction. Fig. 1 illustrates the exhaust pipe Pb2 connected to the engine 20 and constituting the exhaust system 50b and a muffler 61 connected to the exhaust pipe Pb2.

When the engine 20 rotates, the piston 21 shown in Figs. 2 and 3 moves back and forth along the Y-direction. This causes the crank assembly 25S to rotate, causing the drive pulley 25c torotate. Torque generated by the drive pulley 25c is transmitted to the driven pulley 32 through the cam chain 31.

This causes the camshaft 33S to rotate. Thus, the rocker arms 42a and 42b that respectively come into contact with outer peripheral surfaces of the cams 34a and 34b move the intake valve 41a and the exhaust valve 41b back and forth in the Y-direction. As a result, the intake and the exhaust in the engine 20 are controlled.

Note that some of the constituent members of the engine 20 are contained in an engine casing EK in which the cylinder SI shown in Fig. 2 is formed, as indicated by a thick one-dot and dash line in Figs. 3 (a) and 3 (b). One end (the front) of the engine casing EK is opened, and a cylinder head SH is attached to the opening. A space enclosed by an inner surface of the cylinder head SH, an inner surface of the engine casing EK, and the piston 21 is a combustion chamber N.

### (1-c) Effects

In the motorcycle 100 according to the first embodiment, the seat 15, the containing box 17, and the engine 20 are arranged so as to line up downward from above.

In the engine 20 provided in a lower part of the motorcycle 100, the axis CL1 of the cylinder SI is arranged so as to extend in the front-and-rear direction (Y-direction) of the motorcycle 100. This causes a space occupied by the engine 20 in the top-and-bottom direction (Z-direction) of the motorcycle 100 to be reduced.

Furthermore, the intake port Pa1 (the intake system 50a) and the exhaust port Pb1 (the exhaust system 50b) in the engine 20 are arranged so as to line up in the right-and-left direction (X-direction) of the motorcycle 100 while being respectively curved toward the one side and the other side in the X-direction around the axis CL1 of the cylinder SI. This causes the openings of the intake port Pa1 and the exhaust port Pb1 in the engine 20 to be respectively formed on the one side and the other side in the X-direction.

Since the intake system 50a and the exhaust system 50b in the engine 20 are not positioned in the Z-direction (the top-and-bottom direction of the motorcycle 100), therefore, a region occupied by the engine 20 and the peripheral members thereof (the intake pipe Pa2, the exhaust pipe Pb2, the air cleaner, etc.) can be reduced in the top-and-bottom direction of the motorcycle 100.

Therefore, the size of the containing box 17 can be enlarged toward the engine 20 (downward) without increasing the height H1 (Fig. 1) of the seat 15. That is, it is possible to maintain ease with which a rider touches the ground with his/her feet while increasing the size of the containing box 17. To reduce the region occupied by the engine 20 and the peripheral members thereof makes it possible to ensure that the height H2 (Fig. 1) from the road surface to the bottom of the motorcycle 100 is a predetermined height even if the size of the containing box 17 is increased. A high performance of traveling on an irregular surface can be realized.

Furthermore, the necessity of a space where the exhaust pipe Pb2 is routed at the bottom of the engine 20 is eliminated, so that the engine 20 can be arranged as below as possible while maintaining the height H2 such that a high performance of traveling on an irregular surface is obtained. This allows the position of the center of gravity of the motorcycle 100 to be made low, allowing the traveling stability and the steering stability of the motorcycle 100 to be improved.

As described in the foregoing, in the motorcycle 100 according to the present embodiment, it is possible to maintain ease with which a rider touches the ground with his/her feet while making the size of the containing box 17 sufficiently large and realizing a high performance of traveling on an irregular surface.

In Fig. 1, the region occupied by the engine 20 and the peripheral members thereof is indicated by a thick broken line as the power generation region EA. The above-mentioned effect is obtained, so that a space of the containing box 17 is made larger by the size of a hatched portion U in the motorcycle 100 according to the present embodiment, as compared with the motorcycle 900 shown in Fig. 17 described in the background art.

In addition, in the motorcycle 100 according to the present embodiment, the respective shapes of the intake system 50a and the exhaust system 50b can be designed without considering an occupied space in the top-and-down direction of the motorcycle 100. This causes flexibility in design of the intake system 50a and the exhaust system 50b to be increased.

Thus, each of the intake system 50a and the exhaust system 50b can have a simple configuration. For example, in order to route the intake system 50a and the exhaust system 50b, the respective degrees of curvature of the intake pipe Pa2 and the exhaust pipe Pb2 can be gently designed.

In this case, smooth fluid flow can be formed inside the intake system 50a and the exhaust system 50b. This can prevent a fuel from adhering to their inner surfaces. Furthermore, an air-fuel mixture can be made to efficiently flow into the combustion chamber, ideal fluid flow can be formed within the combustion chamber, and a combustion gas can be efficiently discharged from the combustion chamber.

As a result, efficient intake and exhaust in the engine 20 are realized, so that the performance of the engine 20 is improved. Furthermore, the fuel efficiency is improved while a harmful exhaust gas can be reduced.

As shown in Figs. 2 and 3, the engine 20 used in the present embodiment is a single-cylinder engine. Thus, the compact and lightweight motorcycle 100 can be realized.

### (1-d) Arrangement of engine in motorcycle

Description was made of an example in which the engine 20 is provided in the motorcycle 100 such that the axis CL1 of the cylinder SI is substantially parallel to the axis in the Y-direction. Specifically, the engine 20 is provided in the motorcycle 100 as follows, for example.

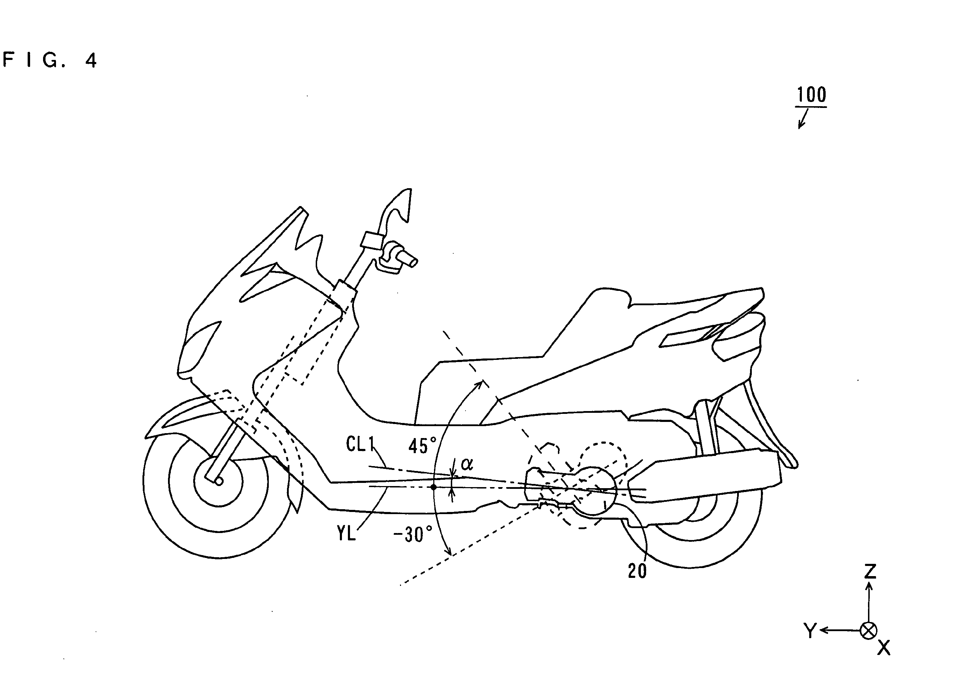

Fig. 4 is a diagram showing the arrangement of the engine 20 in the motorcycle 100 according to the first embodiment. As shown in Fig. 4, in the motorcycle 100 according to the present embodiment, the engine 20 is provided such that an angle α formed between an axis YL parallel to the Y-direction and the axis CL1 of the cylinder SI is within a range of - 30 degrees to + 45 degrees. This allows the above-mentioned effect to be obtained.

### (1-e) State where engine and peripheral members thereof are arranged in motorcycle

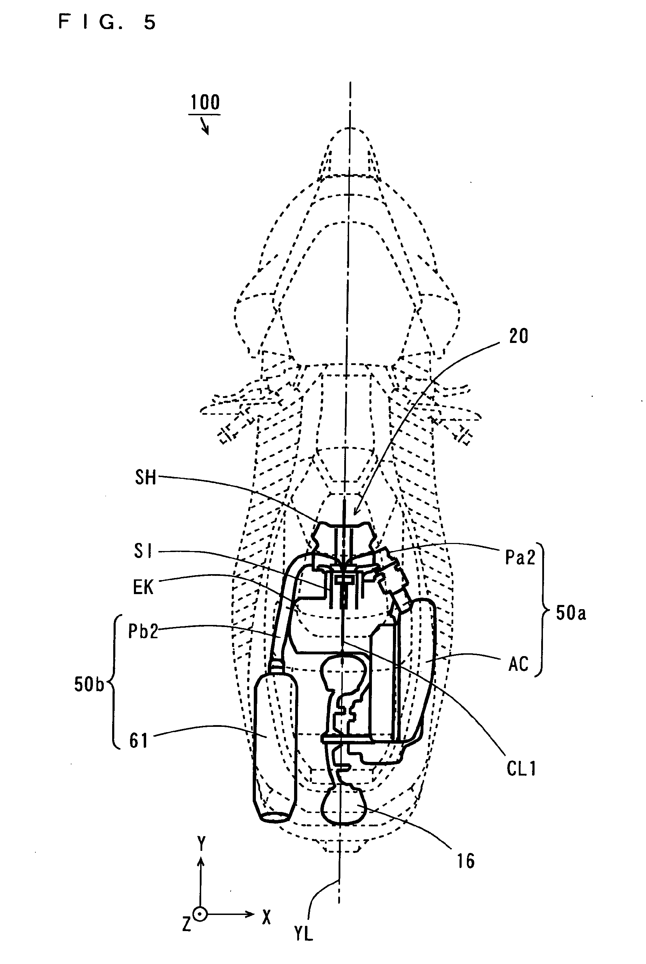

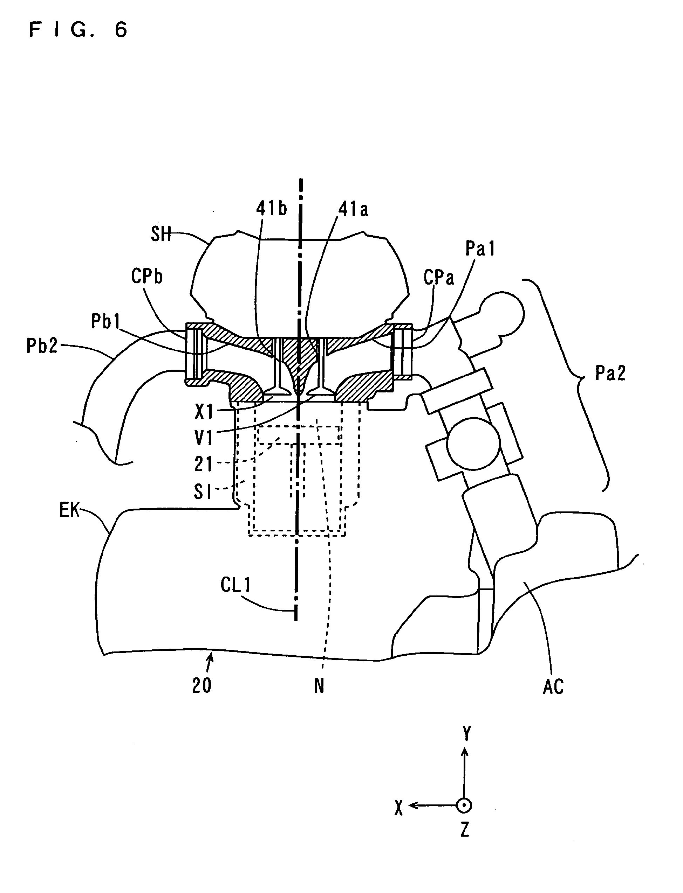

Fig. 5 is a schematic top view showing a state where the engine 20 in the motorcycle 100 shown in Fig. 1 and the peripheral members thereof are arranged, and Fig. 6 is an enlarged top view showing a part of the engine 20 shown in Fig. 5 and the peripheral members thereof.

In Fig. 5, the appearance of the motorcycle 100 is indicated by a dotted line in order to clarify the state where the engine 20 in the motorcycle 100 and the peripheral members thereof are arranged. Furthermore, a part of the cylinder head SH is cut in the illustration of Fig. 6.

As shown in Fig. 5, the engine 20 is supported by a vehicle body frame 10 (not shown) (Fig. 1) such that the axis CL1 (a thick one-dot and dash line) of the cylinder SI coincides with a central axis YL (a one-dot and dash line) of the motorcycle 100 parallel to the Y-direction when the motorcycle 100 is viewed from above. In this case, the engine 20 is positioned in a substantially central part of the motorcycle 100 in the X-direction.

As shown in Fig. 6, inside the cylinder head SH composing the front of the engine 20, the intake opening V1 and the exhaust opening X1 are respectively formed on one side and the other side around the axis CL1 of the cylinder SI.

Furthermore, inside the cylinder head SH, the intake port Pa1 (the intake system 50a) and the exhaust port Pb1 (the exhaust system 50b) are respectively curved toward the one side and the other side around the axis CL1 of the cylinder SI, as described above. Thus, port openings OPa and OPb are respectively formed on one side and the other side in the cylinder head SH around the axis CL1 of the cylinder SI.

One end of the intake pipe Pa2 is attached on the one side to the port opening OPa in the cylinder head SH. Furthermore, one end of the exhaust pipe Pb2 is attached on the other side to the opening port OPb in the cylinder head SH.

As shown in Figs. 5 and 6, the intake pipe Pa2 extends while being curved backward from the port opening OPa in the cylinder head SH. An air cleaner AC is connected to the other end of the intake pipe Pa2. Furthermore, the exhaust pipe Pb2 extends while being curved backward from the port opening OPb in the cylinder head SH. A muffler 61 is connected to the other end of the exhaust pipe Pb2.

In this example, the intake port Pa1, the intake pipe Pa2, and the air cleaner AC in the cylinder head SH constitute the intake system, and the exhaust port Pb1, the exhaust pipe Pb2, and the muffler 61 in the cylinder head SH constitute the exhaust system.

To attach the engine 20 described using Figs. 2 and 3 to the motorcycle 100, as described above, allows members respectively composing the intake system and the exhaust system (the air cleaner AC and the muffler 61 in this example) that require large occupied spaces to be easily arranged on one side and the other side in the engine 20 around the axis CL1 of the cylinder SI.

### (1-f) Another example of foot mounter

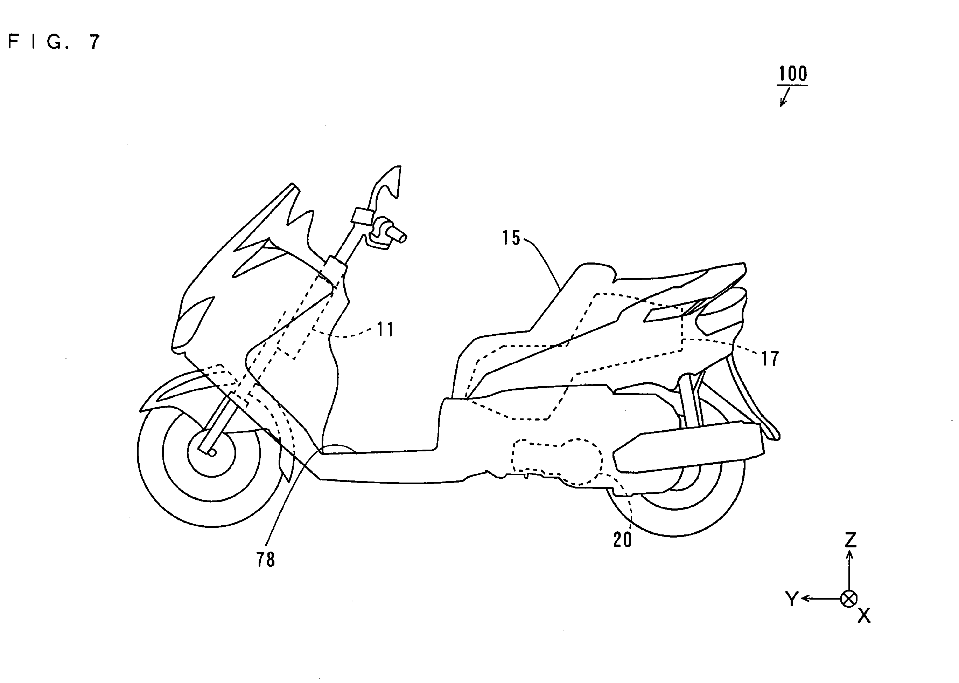

Fig. 7 is a schematic side view showing another example of the configuration of the foot mounter 78 formed in the motorcycle 100 according to the first embodiment. As shown in Fig. 7, in the motorcycle 100 according to the present embodiment, horizontal foot mounters 78 are respectively formed at the right and left of the motorcycle 100 below the front of the seat 15.

In this case, the rider need not straddle a portion, at the front of the seat 15, of the vehicle body frame 10 to get on and off the motorcycle 100. This causes the get on/off performance of the motorcycle 100 to be improved.

### (2) Second Embodiment

The appearance of a motorcycle according to a second embodiment is similar to that of the motorcycle 100 according to the first embodiment shown in Fig. 1. As to the motorcycle 100 according to the second embodiment, the difference from the motorcycle 100 according to the first embodiment will be described. The motorcycle 100 according to the second embodiment differs from the motorcycle 100 according to the first embodiment in the configuration of peripheral members of the engine 20.

### (2-a) Configuration of engine and peripheral members thereof

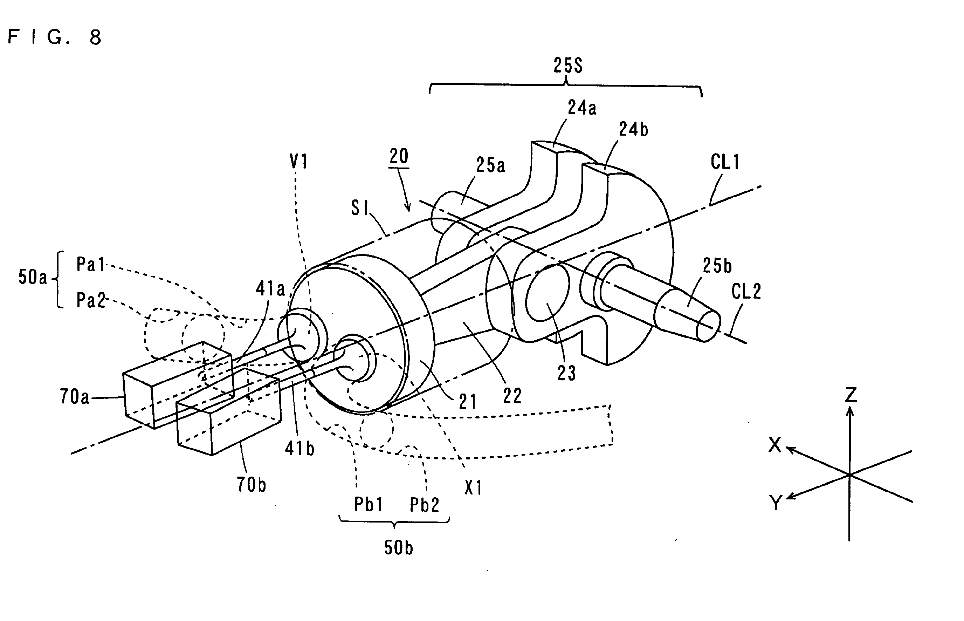

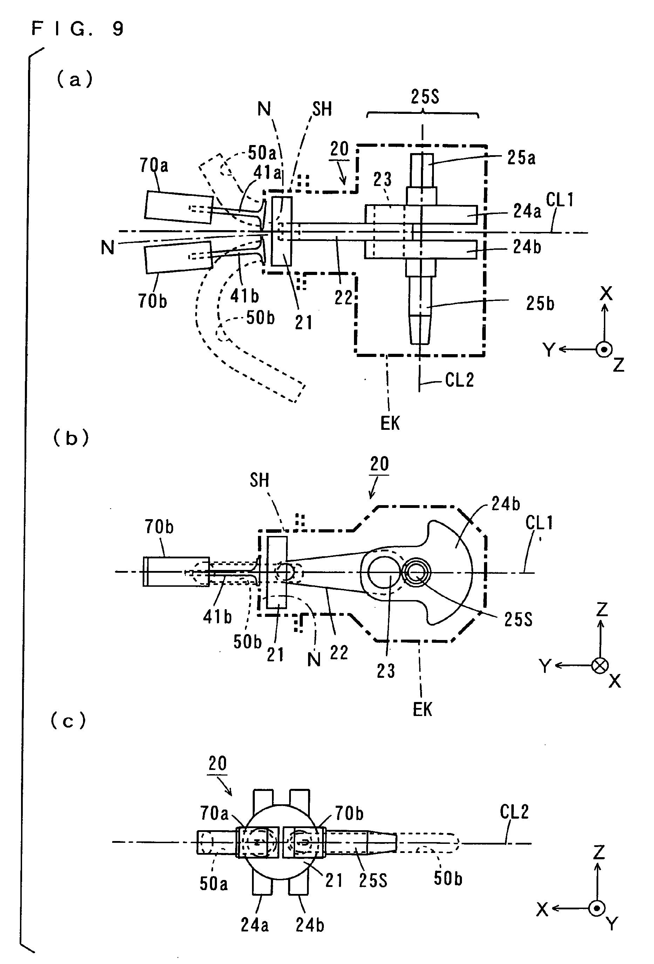

Figs. 8 and 9 are schematic views for explaining the configuration of constituent members of an engine 20 in the motorcycle 100 according to the second embodiment and peripheral members thereof. Fig. 8 is a perspective view of the constituent members of the engine 20 and the peripheral members thereof, Fig. 9 (a) is a top view of the members, Fig. 9 (b) of a side view of the members, and Fig. 9 (c) is a front view of the members.

As shown in Figs. 8 and 9, in the present embodiment, an intake valve 41a is supported by a valve actuator 70a, and an exhaust valve 41b is supported by a valve actuator 70b.

The two valve actuators 70a and 70b are connected to a hydraulic control valve (not shown) through a hydraulic path (not shown). The hydraulic control valve is controlled by a controller (not shown). This causes the valve actuators 70a and 70b to move the intake valve 41a and the exhaust valve 41b back and forth in a Y-direction by hydraulic pressure controlled by the hydraulic control valve.

### (2-b) Effects

When the valve actuators 70a and 70b are respectively used for driving the intake valve 41a and the exhaust valve 41b, as described above, the necessity of the drive pulley 25c, the cam chain 31, the driven pulley 32, the camshaft 33S, and the rocker arms 42a and 42b shown in Figs. 2 and 3 described in the first embodiment is eliminated.

Furthermore, the valve actuators 70a and 70b can be respectively provided at any positions with respect to the engine 20 because they do not utilize torque generated by a crank assembly 25S in the engine 20. This allows a region occupied by the engine 20 and the peripheral members thereof (a power generation region EA (Fig. 1)) to be further sufficiently reduced in a top-and-bottom direction of the motorcycle 100 by arranging the intake valve 41a, the exhaust valve 41b, and the valve actuators 70a and 70b within a horizontal plane (an XY plane) including an axis CL1 of a cylinder SI.

As a result, in the motorcycle 100 according to the present embodiment, it is possible to maintain ease with which a rider touches the ground with his/her feet while further increasing a containing box 17 and realizing a high performance of traveling on an irregular surface.

### (2-c) Arrangement of engine in motorcycle

Also in the present embodiment, the engine 20 is provided such that an angle α formed between an axis YL parallel to the Y-direction and the axis CL1 of the cylinder SI is within a range of - 30 degrees to + 45 degrees, as described using Fig. 4 in the first embodiment. This allows the above-mentioned effect to be obtained.

### (3) Third Embodiment

### (3-a) Configuration of motorcycle

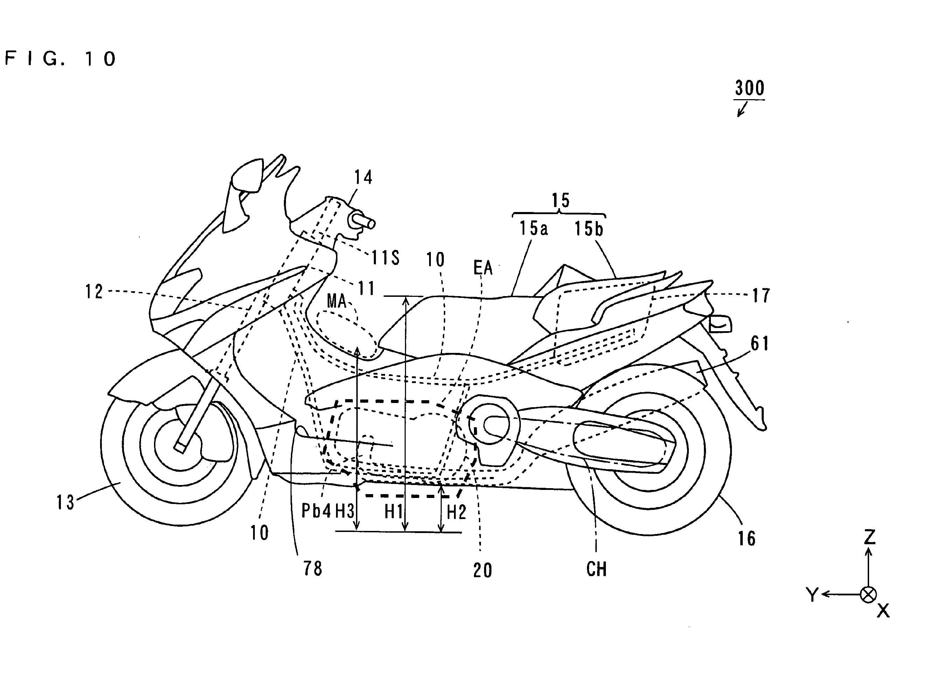

Fig. 10 is a schematic side view of a motorcycle according to a third embodiment. As shown in Fig. 10, also in a motorcycle 300 according to the third embodiment, a head pipe 11 is formed at the front of a vehicle body frame 10, and a steering shaft 11S is attached to the head pipe 11 so as to be swingable rightward and leftward. A handle 14 is attached to an upper end of the steering shaft 11S.

Furthermore, a front fork 12 for rotatably supporting a front wheel 13 is provided so as to be swingable rightward and leftward, as in the first embodiment, in the steering shaft 11S.

A seat 15 including a main seat 15a and a tandem seat 15b is provided in an upper part of the vehicle body frame 10 from the center to the rear thereof. Furthermore, a two-cylinder engine 20 is attached to the bottom at the center of the vehicle body frame 10.

Foot mounters 78 for a rider are respectively formed on right and left side surfaces of the motorcycle 300 (side surfaces as viewed in an X-direction) such that the engine 20 is sandwiched therebetween. The rider straddles a portion, at the front of the seat 15, of the vehicle body frame 10 in the motorcycle 300 to get on and off the motorcycle 300. In the following description, a position at the top of the vehicle body frame 10 which the rider straddles by raising his/her foot to get on/off the motorcycle 300 is referred to as a straddling position MA.

The present embodiment differs from the first embodiment in that the engine 20 provided in the motorcycle 300 is attached to the vehicle body frame 10 separately from a swing arm (not shown). A rear wheel 16 is rotatably provided at one end of the swing arm. The engine 20 and the rear wheel 16 are connected to each other through a power transmission system.

In Fig. 10, a driving mechanism CH that transmits the power of the engine 20 to the rear wheel 16 as a power transmission system is indicated by a one-dot and dash line.

A containing box 17 is provided inside (in a lower part of) the tandem seat 15b provided at the rear in an upper part of the vehicle body frame 10. In the present embodiment, a main seat 15a is arranged above the engine 20. Furthermore, a position above the engine 20 is the straddling position MA.

### (3-b) Configuration of engine and peripheral members thereof

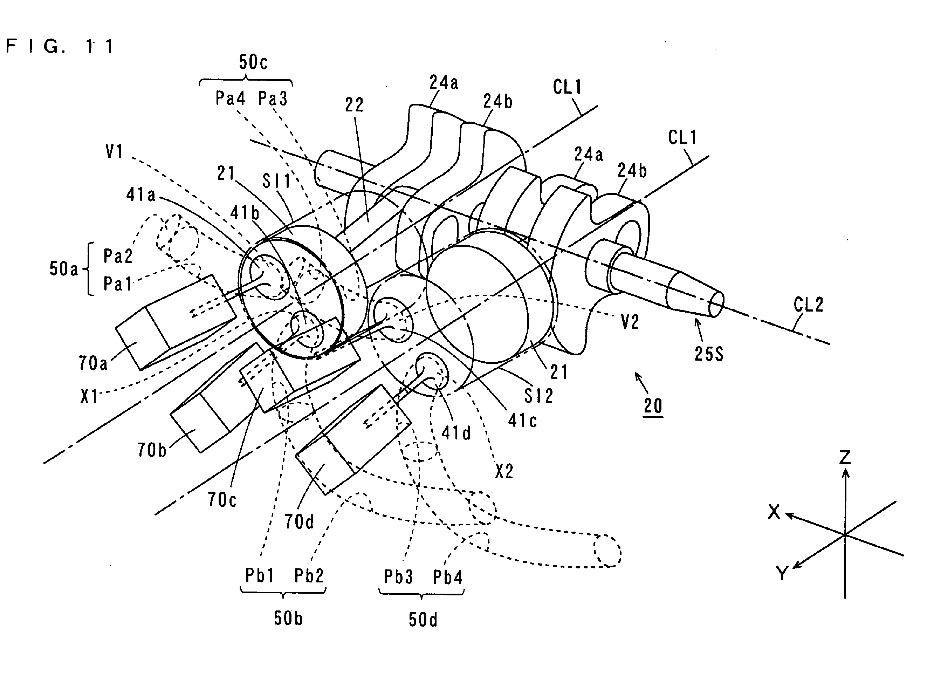

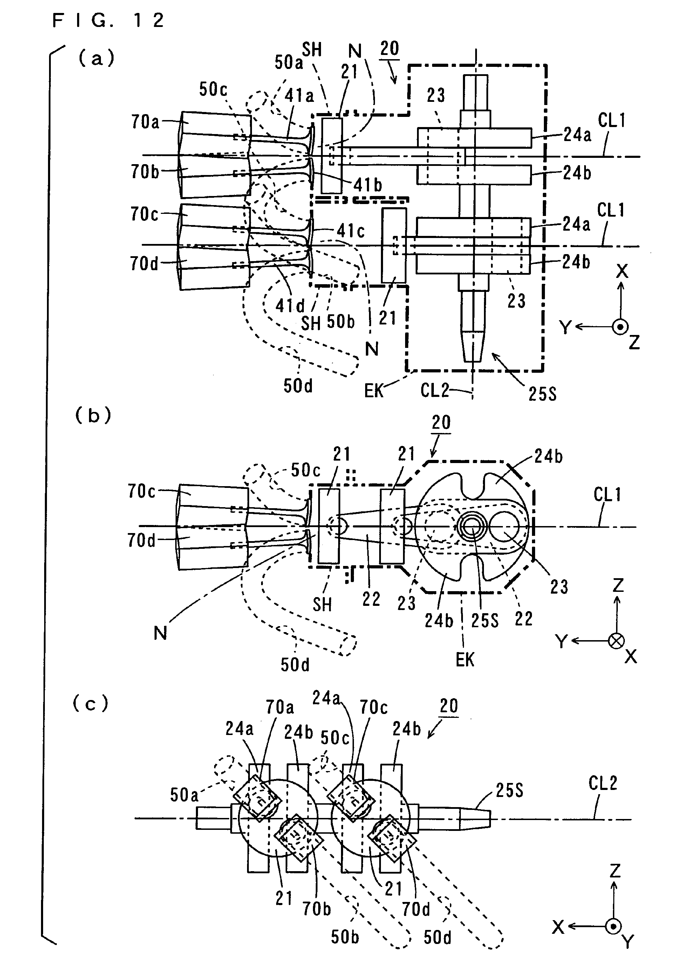

Figs. 11 and 12 are schematic views for explaining the configuration of constituent members of the engine 20 in the motorcycle 300 according to the third embodiment and peripheral members thereof. Fig. 11 is a perspective view of the constituent members of the engine 20 and the peripheral members thereof, Fig. 12 (a) is a top view of the members, Fig. 12 (b) of a side view of the members, and Fig. 12 (c) is a front view of the members.

As shown in Figs. 11 and 12, two cylinders SI1 and SI2 are formed so as to line up in the engine 20. A piston 21, a connecting rod 22, and crank webs 24a and 24b, described in the second embodiment, are provided for each of the two cylinders SI1 and SI2. In Fig. 12, the illustration of the cylinders SI1 and SI2 is omitted.

An intake valve 41a and an exhaust valve 41b are arranged for the cylinder SI1. Furthermore; an intake valve 41c and an exhaust valve 41d are provided for the cylinder SI2.

When the intake valve 41a, the exhaust valve 41b, the intake valve 41C, and the exhaust valve 41d are respectively supported by valve actuators 70a, 70b, 70c, and 70d having the same configurations and operations as those of the valve actuators described in the second embodiment. The valve actuators 70a to 70d move the intake valves 41a and 41c and the exhaust valves 41b and 41d back and forth in a Y-direction.

In Figs. 11 and 12, respective paths of an intake system and an exhaust system in the engine 20 are also represented in tubular form as paths of gases (an air-fuel mixture and a combustion gas, for example), as in Figs. 2 and 3.

Therefore, respective shapes of an inner surface of an intake port in the engine 20 and an inner surface of an intake pipe connected to the intake port are illustrated in intake systems 50a and 50c in the engine 20 shown in Figs. 11 and 12. Furthermore, respective shapes of an inner surface of an exhaust port in the engine 20 and an inner surface of an exhaust pipe connected to the exhaust port are illustrated in exhaust systems 50b and 50d in the engine 20.

In Fig. 11, the intake port and the intake pipe in the engine 20 that constitute the intake system 50a are respectively indicated by a symbol Pa1 and a symbol Pa2, and the exhaust port and the exhaust pipe in the engine 20 that constitute the exhaust system 50b are respectively indicated by a symbol Pb1 and a symbol Pb2.

Furthermore, the intake port and the intake pipe in the engine 20 that constitute the intake system 50c are respectively indicated by a symbol Pa3 and a symbol Pa4, and the exhaust port and the exhaust pipe in the engine 20 that constitute the exhaust system 50d are respectively indicated by a symbol Pb3 and a symbol Pb4.

Furthermore, in Fig. 11, an intake opening serving as a communicating portion between an inner space of the intake port Pa1 and an inner space of the cylinder SI1 is indicated by a symbol V1, and an exhaust opening serving as a communicating portion between an inner space of the exhaust port Pb1 and the inner space of the cylinder SI1 is indicated by a symbol X1. Furthermore, an intake opening serving as a communicating portion between an inner space of the intake port Pa3 and an inner space of the cylinder SI2 is indicated by a symbol V2, and an exhaust opening serving as a communicating portion between an inner space of the exhaust port Pb3 and the inner space of the cylinder SI2 is indicated by a symbol X2.

Description is herein made of the arrangement of the intake valve 41c and the exhaust valve 41d that correspond to the cylinder SI2. As shown in Fig. 12 (a), the intake valve 41c and the exhaust valve 41d are arranged in an X-direction with an axis CL1 of the cylinder SI2 sand wiched there between, as viewed from above (within an XY plane). Thus, the intake port Pa3 (the intake system 50c) and the exhaust port Pb3 (the exhaust system 50d) are respectively curved toward one side and the other side in the X-direction around the axis CL1 of the cylinder SI2.

Furthermore, the intake valve 41c and the exhaust valve 41d are arranged in a Z-direction with an axis CL2 of a crank assembly 25S sandwiched therebetween, as viewed from the side (within an XZ plane), as shown in Fig. 12 (b). Thus, the intake port Pa3 (the intake system 50c) and the exhaust port Pb3 (the exhaust system 50d) are respectively curved toward one side and the other side in the Z-direction around the axis CL1 of the cylinder SI2.

The above-mentioned configuration causes the intake system 50c and the exhaust system 50d to be arranged in a direction obliquely inclined to at least the X-direction, thereby allowing an opening of the intake port Pa3 in the engine 20 to be formed so as to be directed toward the one side in the X-direction and allowing an opening of the exhaust port Pb3 to be formed so as to be directed toward the other side in the X-direction.

Thus, each of the intake pipe Pa4 and the exhaust pipe Pb4 respectively constituting the intake system 50c and the exhaust system 50d can be attached to the engine 20 from the one side and the other side in the X-direction. Fig. 10 illustrates an exhaust pipe Pb4 connected to the engine 20 and constituting the exhaust system 50b and a muffler 61 connected to the exhaust pipe Pb4.

The arrangement of the intake valve 41a and the exhaust valve 41b that correspond to the cylinder SI1 is the same as the arrangement of the intake valve 41c and the exhaust valve 41d that correspond to the cylinder SI2. Thus, each of the intake pipe Pa2 and the exhaust pipe Pb2 respectively constituting the intake system 50a and the exhaust system 50b can be attached to the engine 20 from the one side and the other side in the X-direction.

### (3-c) Effects

When the valve actuators 70a to 70d are used for driving the intake valves 41a and 41c and the exhaust valves 41b and 41d, as described above, the necessity of the drive pulley 25c, the cam chain 31, the driven pulley 32, the camshaft 33S, and the rocker arms 42a and 42b shown in Figs. 2 and 3 described in the first embodiment is eliminated. This allows a region occupied by the engine 20 and the peripheral members thereof (a power generation region EA (Fig. 10)) to be sufficiently reduced in a top-and-bottom direction of the motorcycle 300.

In the present embodiment, the intake system 50a and the exhaust system 50b are provided so as to line up in a direction obliquely inclined to at least the X-direction. The intake system 50a is curved toward one side with respect to a vertical plane (a YZ plane) including the axis CL1 of the cylinder SI1, and the exhaust system 50b is curved toward the other side with respect to the vertical plane including the axis CL1 of the cylinder SI1.

Furthermore, the intake system 50c and the exhaust system 50d are provided so as to line up in a direction obliquely inclined to at least the X-direction. The intake system 50c is curved toward one side with respect to a vertical plane including the axis CL1 of the cylinder SI2, and the exhaust system 50d is curved toward the other side with respect to the vertical plane including the axis CL2 of the cylinder SI2. This allows the power generation region EA (Fig. 10) to be sufficiently reduced in the top-and-bottom direction of the motorcycle 300.

This makes it possible to maintain ease with which a rider touches the ground with his/her feet without increasing the height H1 (Fig. 10) of the seat 15 arranged above the engine 20. Furthermore, the power generation region EA can be sufficiently reduced in the top-and-bottom direction of the motorcycle 300, which makes it possible to ensure that a height H2 (Fig. 10) from a road surface to the bottom of the motorcycle 300 is a predetermined height. This allows a high performance of traveling on an irregular surface to be realized.

Furthermore, the power generation region EA can be sufficiently reduced in the top-and-bottom direction of the motorcycle 300, so that the height H3 of the straddling position MA above the engine 20 to be sufficiently reduced. This causes the get on/off performance of the motorcycle 300 to be improved.

Since a space for routing the exhaust pipes Pb2 and Pb4 at the bottom of the engine 20 can be reduced, the engine 20 can be arranged as below as possible while maintaining the height H2 such that a high performance of traveling on an irregular surface is obtained. This allows the position of the center of gravity of the motorcycle 300 to be made low, thereby allowing the traveling stability and the steering stability of the motorcycle 300 to be improved.

### (3-d) Arrangement of engine in motorcycle

Also in the present embodiment, the engine 20 is provided such that an angle α formed between an axis YL parallel to the Y-direction and the respective axes CL1 of the cylinders SI1 and SI2 is within a range of - 30 degrees to + 45 degrees, as described using Fig. 4 in the first embodiment. This allows the above-mentioned effect to be obtained.

### (4) Fourth Embodiment

The appearance of a motorcycle 300 according to a fourth embodiment is the same as that of the motorcycle 300 according to the third embodiment shown in Fig. 10. As to the motorcycle 300 according to the fourth embodiment, the difference from the motorcycle 300 according to the third embodiment will be described. The motorcycle 300 according to the fourth embodiment differs from the motorcycle 300 according to the third embodiment in the configuration of peripheral members of an engine 20.

### (4-a) Configuration of engine and peripheral members thereof

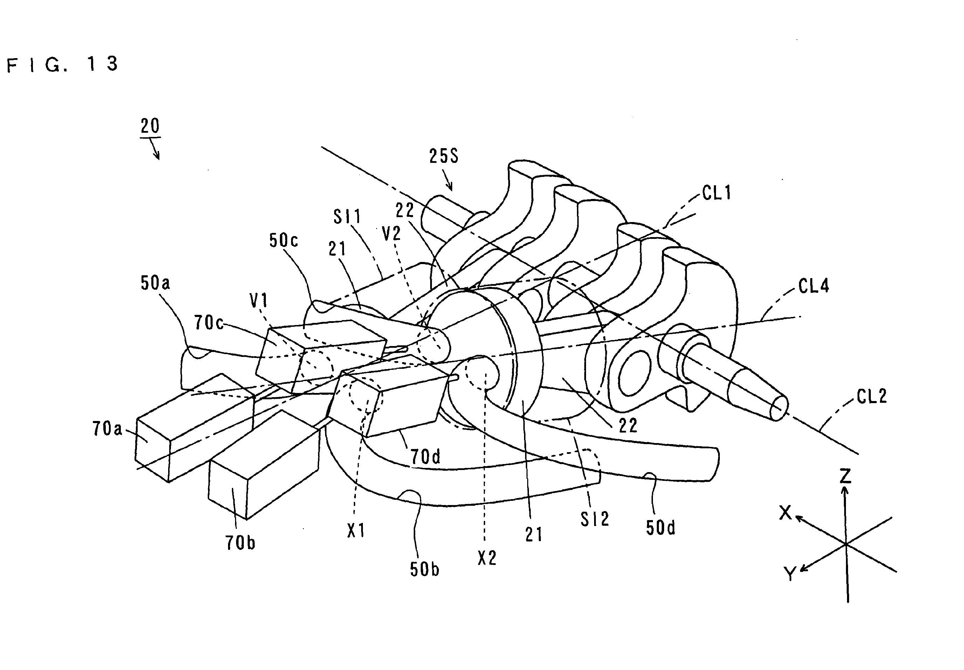

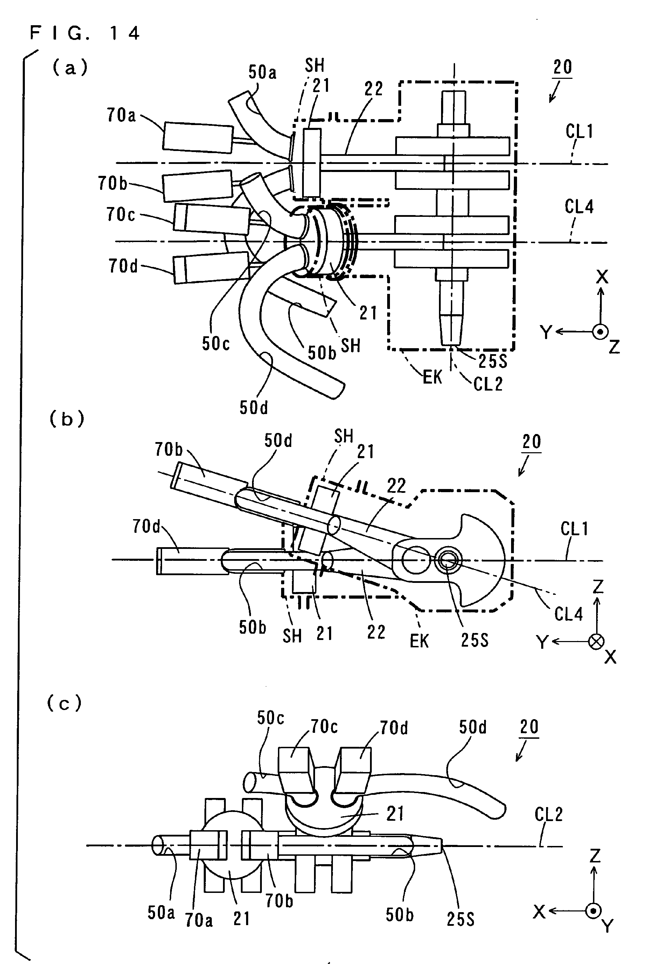

Figs. 13 and 14 are schematic views for explaining the configuration of constituent members of an engine 20 in the motorcycle 300 according to the fourth embodiment and peripheral members thereof. Fig. 13 is a perspective view of the constituent members of the engine 20 and the peripheral members thereof, Fig. 14 (a) is a top view of the members, Fig. 14 (b) of a side view of the members, and Fig. 14 (c) is a front view of the members.

Although in the present embodiment, two cylinders SI1 and SI2 are also formed so as to line up in an X-direction in the engine 20, as shown in Figs. 13 and 14, an axis CL1 of the one cylinder SI1 extends parallel to a Y-direction, and an axis CL4 of the other cylinder SI2 is inclined within a vertical plane (a YZ plane).

Thus, a cylinder head SH of the cylinder SI1 and a cylinder head SH of the cylinder SI2 are shifted in a Z-direction.

Furthermore, an intake system 50a extending from an intake opening V1 in the cylinder SI1 and an exhaust system 50b extending from an exhaust opening X1 therein are respectively curved toward one side and the other side with respect to a vertical plane including the axis CL1 within a plane including the axis CL1 and an axis CL2.

On the other hand, an intake system 50c extending from an intake opening V2 in the cylinder SI2 and an exhaust system 50d extending from an exhaust opening X2 therein are respectively curved toward one side and the other side with respect to a vertical plane including the axis CL4 within a plane including the axis CL4 and the axis CL2.

### (4-b) Effects

To route intake pipes and exhaust pipes that respectively constitute the intake systems 50a and 50c and the exhaust systems 50b and 50d in a right-and-left direction of the engine 20, as described above, allows a power generation region EA (Fig. 10) to be sufficiently reduced in a top-and-bottom direction of the motorcycle 300.

This makes it possible to reliably maintain ease with which a rider touches the ground with his/her feet. Furthermore, it is easy to ensure that a height H2 (Fig. 10) from a road surface to the bottom of the motorcycle 300 is a predetermined height.

Furthermore, the height H3 of a straddling position MA above the engine 20 can be more sufficiently reduced, so that the getting on/off performance of the motorcycle 300 is further improved.

In addition, the position of the center of gravity of the motorcycle 300 can be made lower, so that the traveling stability and the steering stability of the motorcycle 300 are further improved.

### (4-c) Arrangement of engine in motorcycle

In the present embodiment, the engine 20 is also provided such that an angle α formed between an axis YL parallel to the Y-direction and the respective axes CL1 and CL4 of the cylinders SI1 and SI2 is within a range of - 30 degrees to + 45 degrees, as described using Fig. 4 in the first embodiment. This allows the above-mentioned effect to be obtained.

### (5) Fifth Embodiment

The appearance of a motorcycle 300 according to a fifth embodiment is similar to that of the motorcycle 300 according to the third embodiment shown in Fig. 10. As to the motorcycle 300 according to the fifth embodiment, the difference from the motorcycle 300 according to the fourth embodiment will be described. The motorcycle 300 according to the fourth embodiment differs from the motorcycle 300 according to the fourth embodiment in the configuration of peripheral members of an engine 20.

### (5-a) Configuration of engine and peripheral members thereof

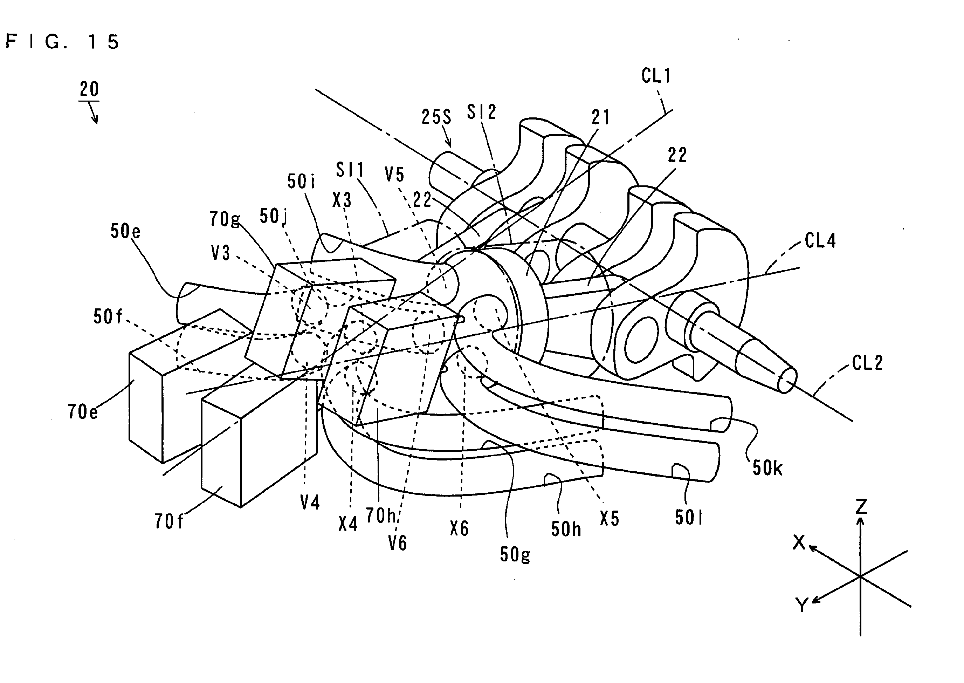

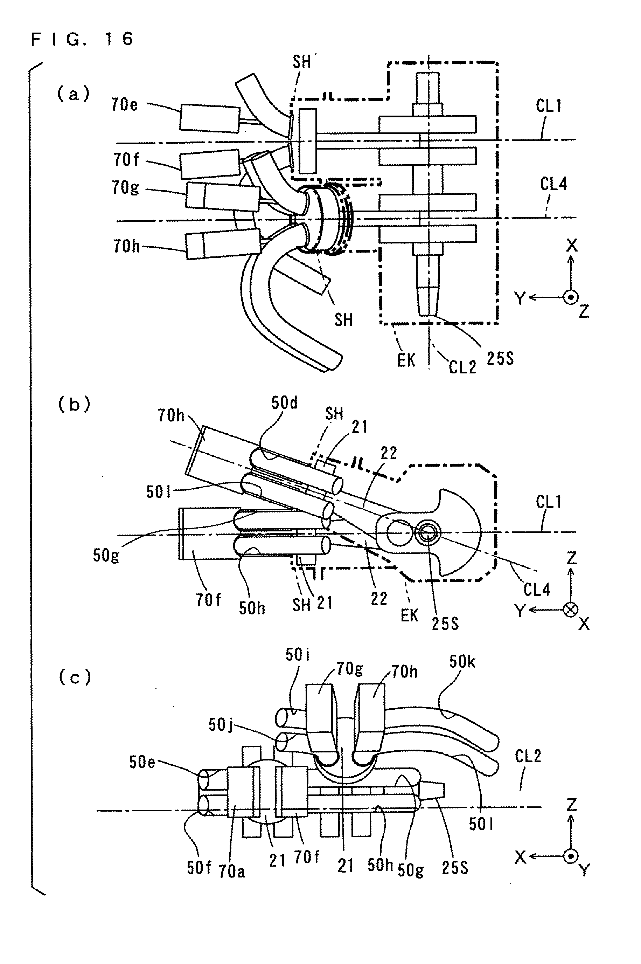

Figs. 15 and 16 are schematic views for explaining the configuration of constituent members of an engine 20 in the motorcycle 300 according to the fifth embodiment and peripheral members thereof. Fig. 15 is a perspective view of the constituent members of the engine 20 and the peripheral members thereof, Fig. 16 (a) is a top view of the members, Fig. 16 (b) of a side view of the members, and Fig. 16 (c) is a front view of the members.

In the present embodiment, two intake openings V3 and V4 are formed in a cylinder SI1, as shown in Figs. 15 and 16. The intake openings V3 and V4 are formed so as to line up in a top-and-bottom direction (Z-direction) on one side in an X-direction around an axis CL1.

Furthermore, two exhaust openings X3 and X4 are formed in the cylinder SI1. The exhaust openings X3 and X4 are formed so as to line up in the top-and-bottom direction (Z-direction) on the other side in the X-direction around the axis CL1.

Similarly, intake openings V5 and V6 and exhaust openings X5 and X6 are also formed in a cylinder SI2 inclined to the cylinder SI1.

Intake systems 50e, 50f, 50i, and 50j are respectively connected to the intake openings V3, V4, V5, and V6, and exhaust systems 50g, 50h, 50k, and 501 are respectively connected to the exhaust openings X3, X4, X5, and X6.

Two intake valves (not shown) respectively provided in the intake openings V3 and V4 are supported by a valve actuator 70e, and two exhaust valves (not shown) respectively provided in the exhaust openings V5 and V6 are supported by a valve actuator 70f.

Two exhaust valves (not shown) respectively provided in the exhaust openings X3 and X4 are supported by a valve actuator 70g, and two exhaust valves (not shown) respectively provided in the exhaust openings X5 and X6 are supported by a valve actuator 70h.

The intake systems 50e and 50f are curved toward one side with respect to a vertical plane including the axis CL1 of the cylinder SL1 within a plane parallel to a plane including the axis CL1 and an axis CL2. Furthermore, the exhaust systems 50g and 50h are curved toward the other side with respect to the vertical plane including the axis CL1 within the plane parallel to the plane including the axis CL1 and the axis CL2.

Furthermore, the intake system 50a extending from the intake opening V1 in the cylinder SI1 and the exhaust system 50b extending from the exhaust opening X1 therein are respectively curved toward the one side and the other side with respect to the vertical plane including the axis CL1 within the plane including the axis CL1 and the axis CL2.

On the other hand, the intake systems 50i and 50j are curved toward one side with respect to a vertical plane including an axis CL4 of the cylinder SI2 within a plane parallel to a plane including the axis CL4 and the axis CL2. Furthermore, the exhaust systems 50k and 501 are curved toward the other side with respect to the vertical plane including the axis CL4 within the plane parallel to the plane including the axis CL4 and the axis CL2.

### (5-b) Effects

In the present embodiment, two intake system and two exhaust systems are provided for one cylinder. This allows an air-fuel mixture to efficiently flow into a combustion chamber. Furthermore, a combustion gas can be very efficiently exhausted from the combustion chamber.

As a result, very efficient intake and exhaust in the engine 20 are realized, so that the performance of the engine 20 is significantly improved.

### (5-c) Arrangement of engine in motorcycle

Also in the present embodiment, the engine 20 is provided such that an angle α formed between an axis YL parallel to a Y-direction and the respective axes CL1 and CL4 of the cylinders SI1 and SI2 is within a range of - 30 degrees to + 45 degrees, as described using Fig. 4 in the first embodiment. This allows the above-mentioned effect to be obtained.

### (6) Correspondence between constituent elements in claims and parts in embodiments

In the following paragraphs, non-limiting examples of correspondences between various elements recited in the claims below and those described above with respect to various preferred embodiments of the present invention are explained.

In the first to fifth embodiments described above, the driving mechanism CH is an example of a transmission mechanism, the vehicle body frame 10 is an example of a supporting member, the axis CL1 is an example of an axis of a cylinder, the intake systems 50a, 50c, 50e, 50f, 50i, and 50j are examples of an intake path, and the exhaust systems 50b, 50d, 50g, 50h, 50k, and 501 are examples of an exhaust path.

The containing box 17 is an example of a container, the valve actuators 70a, 70c, 70e, and 70g are examples of a first actuator, and the valve actuators 70b, 70d, 70f, and 70f are examples of a second actuator.

Furthermore, the intake pipe Pa2 and the air cleaner AC are examples of an intake device, and the exhaust pipe Pb2 and the muffler 61 are examples of an exhaust device.

As each of constituent elements in the claims, various other elements having the configuration or the function described in the claims can be also used.

### [Industrial Applicability]

The present invention is applicable to various types of vehicles and ships including engines, for example, motorcycles and four-wheeled vehicles.

## Claims

1. A motorcycle comprising:
an engine including a cylinder and a cylinder head that form a combustion chamber;
a driving wheel;
a transmission mechanism that transmits to the driving wheel power generated by the engine; and
a supporting member that supports the engine and the driving wheel,
wherein the cylinder is arranged such that its axis extends in a front-and-rear direction of the motorcycle, and
the cylinder head includes an intake opening and an exhaust opening in the combustion chamber that are respectively arranged on one side and the other side with respect to a vertical plane including the axis of the cylinder.

2. The motorcycle according to claim 1, wherein the axis of the cylinder in the engine is within a range from an angle of 30 degrees diagonally downward to the front of a horizontal plane to an angle of 45 degrees diagonally upward to the front of the horizontal plane.

3. The motorcycle according to claim 1, further comprising
an intake device that supplies an air-fuel mixture to the combustion chamber, and
an exhaust device that exhausts a combustion gas from the combustion chamber,
wherein the cylinder head further includes
an intake path curved toward the one side with respect to the vertical plane from the intake opening to communicate with the intake device, and
an exhaust path curved toward the other side with respect to the vertical plane from the exhaust opening to communicate with the exhaust device.

4. The motorcycle according to claim 1, further comprising
a seat provided in the supporting member,
wherein the engine is provided so as to be positioned below the seat.

5. The motorcycle according to claim 4, further comprising a container provided so as to be positioned above the engine.

6. The motorcycle according to claim 5, wherein at least a part of the container is positioned below the seat.

7. The motorcycle according to claim 4, further comprising a foot mounter provided below the front of the seat.

8. The motorcycle according to claim 1, further comprising
a seat provided in the supporting member, and
foot mounters provided on both sides of a portion, below the front of the seat, of the supporting member,
wherein the engine is provided in a portion, between the foot mounters, of the supporting member.

9. The motorcycle according to claim 1, wherein
the engine includes
a crankshaft extending in a horizontal direction perpendicular to the front-and-rear direction,
an intake valve that opens and closes the intake opening,
an exhaust valve that opens and closes the exhaust opening, and
a camshaft that extends in a horizontal direction perpendicular to the front-and-rear direction and drives the intake valve and the exhaust valve, and
the intake opening and the exhaust opening are provided so as to line up in the horizontal direction perpendicular to the front-and-rear direction or a direction inclined from the horizontal direction.

10. The motorcycle according to claim 1, wherein
the engine includes
an intake valve that opens and closes the intake opening,
an exhaust valve that opens and closes the exhaust opening,
a first actuator that drives the intake valve, and
a second actuator that drives the exhaust valve, and
the intake opening and the exhaust opening line up in a horizontal direction perpendicular to the front-and-rear direction or a direction inclined from the horizontal direction.
